(19)

Europäisches
Patentamt
European
Patent Office
Office européen
des brevets

(11) **EP 3 996 115 A1**

(12) **EUROPEAN PATENT APPLICATION**
published in accordance with Art. 153(4) EPC

(43) Date of publication:
**11.05.2022 Bulletin 2022/19**

(51) International Patent Classification (IPC):
$H01F\ 1/053^{(2006.01)}$  $H01F\ 1/14^{(2006.01)}$
$H01F\ 7/02^{(2006.01)}$  $H01F\ 27/24^{(2006.01)}$
$H01F\ 3/00^{(2006.01)}$

(21) Application number: 20835301.1

(22) Date of filing: **19.03.2020**

(52) Cooperative Patent Classification (CPC):
**H01F 1/053; H01F 1/14; H01F 3/00; H01F 7/02;
H01F 27/24**

(86) International application number:
**PCT/KR2020/003771**

(87) International publication number:
**WO 2021/002564 (07.01.2021 Gazette 2021/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.07.2019 KR 20190079113
26.12.2019 KR 20190175279**

(71) Applicant: **Industry-University Cooperation
Foundation
Hanyang University ERICA Campus
Ansan-si, Gyeonggi-do 15588 (KR)**

(72) Inventors:
• **CHOA, Yongho**
**Seongnam-si Gyeonggi-do 13613 (KR)**
• **KIM, Jongryoul**
**Seoul 02467 (KR)**
• **LEE, Jimin**
**Seoul 07542 (KR)**
• **LEE, Gyutae**
**Seoul 02204 (KR)**
• **OH, Yeong-Been**
**Ansan-si Gyeonggi-do 15321 (KR)**
• **SHIN, Ji Won**
**Incheon 21931 (KR)**

(74) Representative: **Dr. Gassner & Partner mbB
Wetterkreuz 3
91058 Erlangen (DE)**

(54) **FIBROUS MAGNETIC STRUCTURE AND MANUFACTURING METHOD THEREOF**

(57) Provided are a fibrous magnetic structure and a manufacturing method thereof. The manufacturing method of the fibrous magnetic structure comprises the steps of: preparing a magnetic core fiber including a rare earth element and a core transition metal element; arranging catalyst particles on the magnetic core fiber, and forming a magnetic shell surrounding the magnetic core fiber by using the catalyst particles as a plating process using a base source including a first precursor including a first shell transition metal element and a second precursor including a second shell transition metal element, and including a compound of the first shell transition metal element and the second shell transition metal element.

【Fig. 1】

EP 3 996 115 A1

**Description**

[Technical Field]

The present invention relates to a fibrous magnetic structure and a method for fabricating the same and, more specifically, to a fibrous magnetic structure including a magnetic core fiber containing a rare earth element and a magnetic shell containing a transition metal compound, and a method for fabricating the same.

[Background Art]

A hard ferrite permanent magnet has been indispensably used in electric devices such as motors, speakers, measuring instruments, etc., and small motors in hybrid vehicles (HEV) and electric vehicles (EV). As materials for the magnet, RE-Fe-B-based, RE-Fe-N-based, and RE-TM-based elements (RE = rare earth elements, TM = transition metal elements) with high coercivity are widely used. The rare earth magnet has a magnetic ability that is dozens of times higher compared with non-rare earth-based Mn-Al, Mn-Bi and ferrite.

In keeping with the recent weight reduction, miniaturization, and high performance of electronic products, there a need for a permanent magnet material having a more improved maximum magnetic energy product ($(BH)_{max}$). Since the development of single-phase rare earth materials is limited due to a critical point and thus a recent study has been conducted on an "exchange spring magnet" that complements the limitation. The exchange spring magnet refers to a material in which the existing single-phase hard magnetic material is combined with a soft magnetic material so as to provide a magnetic exchange-coupling interaction. The main issue of the exchange spring magnet focuses on how to increase a magnetization value, coercivity and magnetic energy product by changing the shape, structure or the like of hard magnetism and soft magnetism.

Besides, various studies have been conducted on permanent magnet with enhanced magnetic properties and its materials. For example, Korean Unexamined Patent Publication No. 10-2017-0108468 (application No.: 10-2016-0032417 and applicant: Academic-Industrial Collaboration of Yonsei University) discloses a non-rare earth permanent magnet with enhanced coercivity including a substrate and a thin film stacked body which is formed on the substrate and in which a stacked unit including a Bi thin film layer and a Mn thin film layer is repeatedly stacked and heat-treated at least twice, as well as a method for fabricating the same. Besides, various studies on permanent magnet with enhanced magnetic properties and its materials are being conducted.

[Disclosure]

[Technical Problem]

One technical object of the present invention is to provide a fibrous magnetic structure with enhanced coercivity and a method for fabricating the same.

Another technical object of the present invention is to provide a fibrous magnetic structure with enhanced maximum magnetic energy product and a method for fabricating the same.

Still another technical object of the present invention is to provide a fibrous magnetic structure with a decrease in magnetic aggregation phenomena, and a method for fabricating the same.

Still another technical object of the present invention is to provide a fibrous magnetic structure with a one-dimensional shape and a method for fabricating the same.

Still another technical object of the present invention is to provide a fibrous magnetic structure in which an exchange-coupling effect between a hard magnetic structure and a soft magnetic structure is expressed, and a method for fabricating the same.

The technical objects of the present invention are not limited to the above.

[Technical Solution]

To solve the above technical objects, the present invention may provide a method for fabricating a fibrous magnetic structure.

According to one embodiment, the method for fabricating the fibrous magnetic structure may include: preparing a magnetic core fiber including a rare earth element and a core transition metal element; arranging catalyst particles on the magnetic core fiber; and forming a magnetic shell surrounding the core fiber by using the catalyst particles as a plating process using a base source including a first precursor including a first shell transition metal element and a second precursor including a second shell transition metal element, and including a compound of the first shell transition metal element and the second shell transition metal element.

According to one embodiment, the base source may be provided for a time of less than 20 minutes and a thickness of the magnetic shell may be 40 nm or less.

According to one embodiment, a temperature of the base source may be controlled to be more than 70°C and less than 90°C.

According to one embodiment, the base source may further include a pH regulator, and the pH of the base source may be controlled to be more than 8 and less than 12.

According to one embodiment, the preparing of the magnetic core fiber may include: preparing a source solution including the rare earth element and the core transition metal element; fabricating a preliminary magnetic core fiber by electrospinning the source solution; oxidizing the preliminary magnetic core fiber by heat treatment; and reducing the oxidized preliminary magnetic core fiber by heat treatment with a reducing agent.

To solve the technical objects as described above, the present invention may provide a fibrous magnetic structure.

According to one embodiment, the fibrous magnetic structure may include: a magnetic core fiber including a rare earth element and a core transition metal element; and a magnetic shell surrounding the magnetic core fiber and including the first shell transition metal element and the second shell transition metal element, in which an exchange-coupling effect between the magnetic core fiber and the magnetic shell is greater than a dipolar interaction of the magnetic core fiber and the magnetic shell.

According to one embodiment, the fibrous magnetic structure may include one peak represented in a graph showing a value obtained by <Equation 1> below with respect to an applied field value (Oe).

$$<\text{Equation 1}>$$

$$dM/dH$$

(M: Magnetic moments, H: External magnetic field applied)

According to one embodiment, the magnetic core fiber may have a plurality of single crystals connected in series in a longitudinal direction of the magnetic core fiber.

According to one embodiment, a diameter of the magnetic core fiber may be smaller than a size of a single domain of the magnetic core fiber.

According to one embodiment, a thickness of the magnetic shell may be smaller than a double of a domain-wall width of the magnetic core fiber.

According to one embodiment, the magnetic shell may be conformally disposed on the magnetic core fiber.

According to one embodiment, the rare earth element may include any one of La, Ce, Pr, Nd, Sm, or Gd.

According to one embodiment, the core transition metal element, the first shell transition metal element, and the second shell transition metal element may include any one of Fe, Co, or Ni.

According to one embodiment, the core transition metal element may be the same as any one of the first shell transition metal element or the second shell transition metal element.

[Advantageous Effects]

A fibrous magnetic structure according to an embodiment of the present invention can have a one-dimensional shape including a magnetic core fiber and a magnetic shell surrounding the magnetic fiber. Accordingly, there may be provided a magnetic structure with enhanced magnetic properties such as coercivity, maximum magnetic energy product, etc., since self-aggregation by attraction is prevented, a shape anisotropy constant is increased, and an exchange-coupling effect between the magnetic core fiber and the magnetic shell is expressed to be greater than a dipolar interaction of the magnetic core fiber and the magnetic shell.

[Description of Drawings]

FIG. 1 is a flowchart for explaining a method for fabricating a fibrous magnetic structure according to an embodiment of the present invention.

FIG. 2 is a flowchart for specifically explaining a step of preparing a magnetic core fiber in a method for fabricating a fibrous magnetic structure according to an embodiment of the present invention.

FIG. 3 is a view showing a process of fabricating a fibrous magnetic structure according to an embodiment of the present invention.

FIG. 4 is a view showing a fibrous magnetic structure according to an embodiment of the present invention.

FIG. 5 is a view showing region A in T-T' section of FIG. 4.

FIG. 6 is a view showing a section of a fibrous magnetic structure according to another embodiment of the present invention.

FIG. 7 is a photographic view showing a magnetic core fiber according to an embodiment of the present invention.

FIG. 8 is a graph showing properties of a magnetic core fiber according to an embodiment of the present invention.

FIG. 9 is a photographic view showing a comparison between a spherical magnetic structure according to Comparative Example of the present invention and a fibrous magnetic fiber according to Example.

FIGS. 10 and 11 are graphs showing the coercivity and maximum magnetic energy product of magnetic structures according to Comparative Example and Example of the present invention.

FIGS. 12 and 13 are graphs showing a comparison of various magnetic properties of magnetic structures according to Comparative Example and Example of the present invention.

FIGS. 14 and 15 are photographic views showing a magnetic core fiber and a fibrous magnetic structure according to Example of the present invention.

FIG. 16 is a photographic view specifically showing a fibrous magnetic structure according to Example 1 of the present invention.

FIG. 17 is a photographic view specifically showing a fibrous magnetic structure according to Example 4 of the present invention.

FIG. 18 is a graph showing an XRD pattern of a magnetic core fiber and a fibrous magnetic structure according to an embodiment of the present invention.

FIG. 19 is a graph showing an M-H curve of a magnetic core fiber and a fibrous magnetic structure according to an embodiment of the present invention.

FIG. 20 is a graph showing an effect of $FeSO_4$ concentration during a process of fabricating a fibrous magnetic structure according to an embodiment of the present invention.

FIG. 21 is a photographic view showing a fibrous magnetic structure according to Examples 6 and 7 of the present invention.

FIG. 22 is a photographic view showing a fibrous magnetic structure according to Examples 5 and 8 of the present invention.

FIG. 23 is a graph showing crystallinity of a fibrous magnetic structure according to Examples 5 to 8 of the present invention.

FIG. 24 is a graph showing magnetic properties of a fibrous magnetic structure according to Examples 5 to 8 of the present invention.

[Best Mode]

Hereinafter, preferred embodiments of the present invention will be described in detail with reference to the accompanying drawings. However, the technical idea of the present invention is not limited to the embodiments described herein and may be embodied in other forms. The embodiments introduced herein are provided to sufficiently deliver the spirit of the present invention to those skilled in the art so that the disclosed contents may become thorough and complete.

When it is mentioned in the specification that one element is on another element, it means that the first element may be directly formed on the second element or a third element may be interposed between the first element and the second element. Further, in the drawings, the thicknesses of the membrane and areas are exaggerated for efficient description of the technical contents.

Further, in the various embodiments of the present invention, the terms such as first, second, and third are used to describe various elements, but the elements are not limited to the terms. These terms are used only to distinguish one component from another component. Accordingly, an element mentioned as a first element in one embodiment may be mentioned as a second element in another embodiment. The embodiments illustrated here include their complementary embodiments. Further, the term "and/or" in the specification is used to include at least one of the elements enumerated in the specification.

In the specification, the terms of a singular form may include plural forms unless otherwise specified. Further, the terms "including" and "having" are used to designate that the features, the numbers, the steps, the elements, or combinations thereof described in the specification are present, and are not to be understood as excluding the possibility that one or more other features, numbers, steps, elements, or combinations thereof may be present or added. In addition, the term "connection" used herein may include the meaning of indirectly connecting a plurality of components, and directly connecting a plurality of components.

Further, in the following description of the present invention, a detailed description of known functions and configurations incorporated herein will be omitted when it may make the subject matter of the present invention unnecessarily unclear.

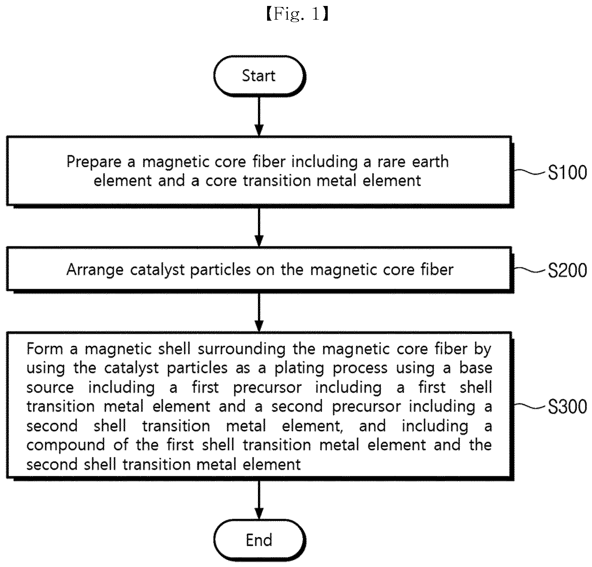

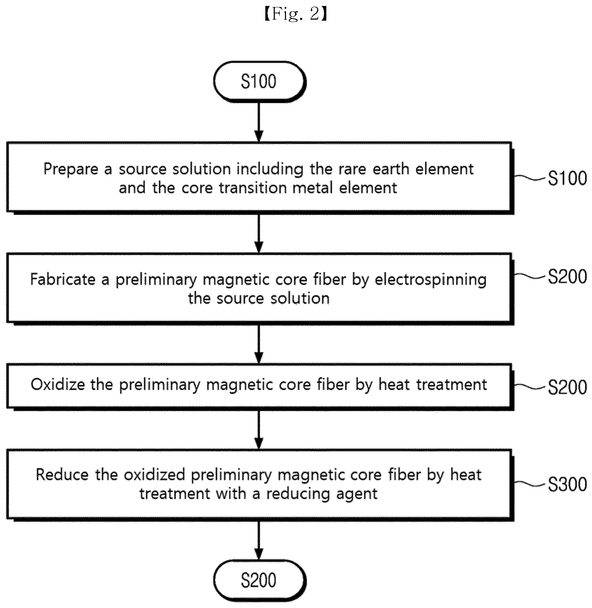

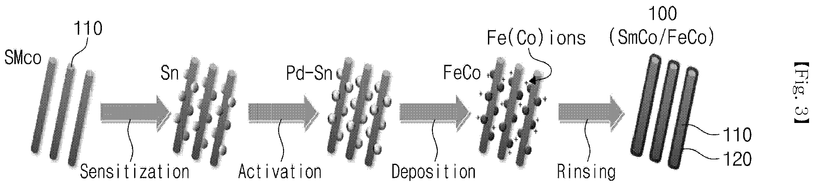

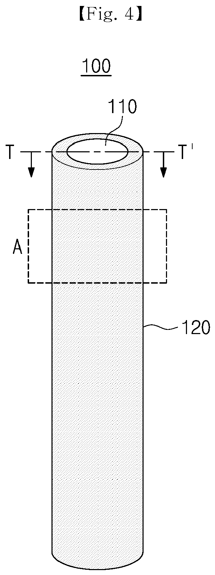

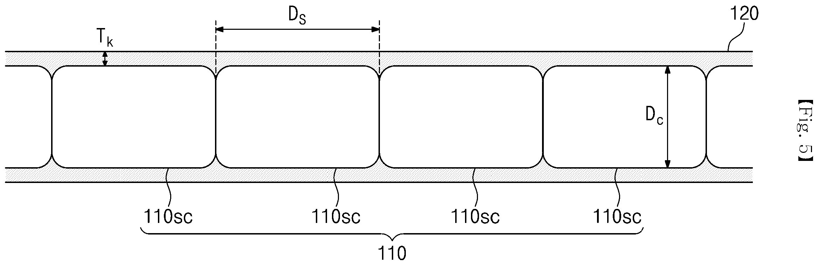

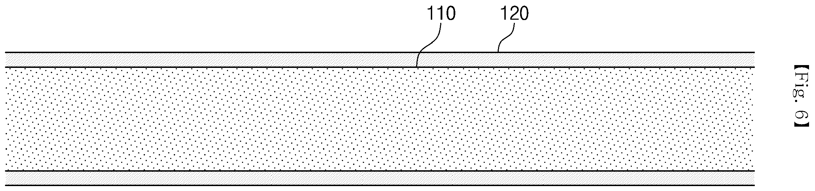

FIG. 1 is a flowchart for explaining a method for fabricating a fibrous magnetic structure according to an embodiment of the present invention, FIG. 2 is a flowchart for specifically explaining a step of preparing a magnetic core fiber in a method for fabricating a fibrous magnetic structure according to an embodiment of the present invention, FIG. 3 is a view showing a process of fabricating a fibrous magnetic structure according to an embodiment of the present invention, FIG. 4 is a view showing a fibrous magnetic structure according to an embodiment of the present invention, FIG. 5 is a view showing region A in T-T' section of FIG. 4, and FIG. 6 is a view showing a section of a fibrous magnetic structure according to another embodiment of the present invention.

Referring to FIGS. 1 to 5, a magnetic core fiber 110 may be prepared (S100). According to one embodiment, the preparing of the magnetic core fiber (110) may include preparing a source solution (S110), fabricating a preliminary magnetic core fiber (S120), oxidizing a preliminary magnetic core fiber (S130), and reducing an oxidized preliminary magnetic core fiber (S140). Hereinafter, each of the steps will be described in detail.

In above S110, the source solution may be prepared. According to one embodiment, the source solution may include a rare earth element and a core transition metal element. According to one embodiment, the rare earth element may include at least one of La, Ce, Pr, Nd, or Sm. For example, the rare earth element may include nitrate, specifically any one of $La(NO_3)_3 \cdot 6H_2O$, $La(NO_3)_3 \cdot \chi H_2O$, $Ce(NO_3)_3 \cdot 6H_2O$, $Ce(NO_3)_5(H_3O)_2 \cdot H_2O$, $Pr(NO_3)_3 \cdot 6H_2O$, $Nd(NO_3)_3 \cdot 6H_2O$, $Nd(NO_3)_3 \cdot \chi H_2O$, and $Sm(NO_3)_3 \cdot 6H_2O$. According to one embodiment, the core transition metal element may include at least one of Fe, Co, or Ni. For example, the core transition metal element may include nitrate, specifically any one of $Fe(NO_3)_3 \cdot 9H_2O$, $Co(NO_3)_2 \cdot 6H_2O$, and $Ni(NO_3)_2 \cdot 6H_2O$.

The source solution may further contain a polymeric material, an additive and a solvent. According to one embodiment, the polymeric material may include at least one of polyvinylpyrrolidone (PVP), polyacrylonitrile (PAN), poly(vinyl acetate) (PVAC), polyvinylbutyral (PVB), poly(vinyl alcohol) (PVA) or polyethylene oxide (PEO). According to one embodiment, the additive may be citric acid ($C_6H_8O_7$). According to one embodiment, the solvent may be a mixed solution of distilled water and ethanol.

For example, the source solution may be fabricated by mixing $Sm(NO_3)_3 6H_2O$, $Co(NO_3)_2 6H_2O$, 0.3 wt% of polyvinylpyrrolidone (PVP), and 1.0M of citric acid anhydrous in DI water, followed by stirring for six hours.

In above S120, the source solution may be electrospun to fabricate a preliminary magnetic core fiber. According to one embodiment, the source solution may be injected into a syringe and the nanofiber may be spun by using a syringe pump. A collector in which the syringe tip and the spun nanofiber are collected may be spaced apart by 10 to 20 cm, and the syringe pump may spin the nanofiber at a rate of 0 to 0.5 mL/h. For example, the nanofiber may be spun at a rate of 0.3 mL/h by applying a voltage of 20 kV to the syringe pump, but a distance between the syringe tip and the collector may be 15 cm.

According to one embodiment, a diameter of the preliminary magnetic core fiber may be controlled by adjusting the viscosity of the source solution. The viscosity of the source solution may be adjusted according to a relative amount of the polymeric material compared to the rare earth element and the core transition metal element. Specifically, when the amount of the polymeric material is increased compared to the rare earth element and the core transition metal element, the viscosity may increase and thus the diameter of the preliminary magnetic core fiber may increase. Alternatively, when the amount of the polymeric material is decreased compared to the rare earth element and the core transition metal element, the viscosity may decrease and thus the diameter of the preliminary magnetic core fiber may decrease.

In above S130, the preliminary magnetic core fiber may be oxidized. According to one embodiment, the preliminary magnetic core fiber may be oxidized by heat treatment. For example, the preliminary magnetic core fiber may be heat-treated in air at a temperature of 700°C.

In above S140, the oxidized preliminary magnetic core fiber may be reduced. According to one embodiment, the preliminary magnetic core fiber may be reduced by heat treatment after being mixed with a reducing agent. For example, the reducing agent may include any one of calcium (Ca) or calcium hydride ($CaH_2$). For example, the preliminary magnetic core fiber may be heat-treated at a temperature of 700°C for three hours. Finally, the reduced preliminary magnetic core fiber may be rinsed to fabricate the magnetic core fiber 110 according to an embodiment. According to one embodiment, the magnetic core fiber 110 may have hard magnetism.

As a result, the magnetic core fiber 110 according to the embodiment may include a compound of the rare earth element and the core transition metal element. For example, the magnetic core fiber 110 may have at least one compound structure of $Sm_2Co_7$, $Sm_2Co_{17}$, $SmCo_7$, $SmCo_3$, $SmCo_5$, or $SmCo_{12}$. In contrast, as another example, the magnetic core fiber 110 may have a compound structure of $Sm_x(Co, N)_y(C, B, Zr, Cu, Hf, Nb, Ti, M)_z$ (x,y>0 / N: any one of transition metal elements excluding cobalt, M: one of the elements in the given formula and the elements on the periodic table other than N). Alternatively, as still another example, the magnetic core fiber 110 may have a compound structure such as an Nd-Fe-B-based alloy, a Sm-Fe-N-based alloy, etc. Besides, the magnetic core fiber 110 may include various compound structures having hard magnetism. The compound structure of the magnetic core fiber 110 may not be limited.

According to one embodiment, the magnetic core fiber 110 may have a structure in which a plurality of single crystals 110sc are connected in series in a longitudinal direction of the magnetic core fiber 110 as shown in FIG. 5. Alternatively, according to another embodiment, the magnetic core fiber 110 may have a polycrystalline structure as shown in FIG. 6.

Catalyst particles may be disposed on the magnetic core fiber 110 (S200). According to one embodiment, the catalyst particles may be formed by reacting a first metal catalyst and a second metal catalyst. According to one embodiment, the first metal catalyst may include tin (Sn). For example, the first metal catalyst may be $SnCl_2$. In contrast, the second metal catalyst may include palladium (Pd). For example, the second metal catalyst may be $PdCl_2$. Accordingly, the catalyst particles may include Pd-Sn. More specifically, the magnetic core fiber 110 may be immersed in a mixed solution of $SnCl_2 2H_2O$ and HCl (35-37%) for five minutes and then may be immersed in a mixed solution of $PdCl_2$ and HCl for at least two minutes, and thus the catalyst particles (Pd-Sn) may be formed on the magnetic core fiber 110.

A base source may be provided to the magnetic core fiber 110 on which the catalyst particles are disposed so as to form a magnetic shell 120 (S300). According to one embodiment, the base source may be provided by an electroless plating process. Accordingly, the fibrous magnetic structure 100 including the magnetic core fiber 110 and the magnetic shell 120 may be fabricated.

The base source may include a first precursor and a second precursor. According to one embodiment, the first precursor may include a first transition metal element. For example, the first transition metal element may include any one of Fe, Co, or Ni. For example, the first precursor may include $FeSO_4$. In contrast, the second precursor may include a second transition metal element. For example, the second transition metal element may include any one of Fe, Co, or Ni. For example, the second precursor may include $CoSO_3$. In other words, the first shell transition metal element may be different from the second shell transition metal element. In contrast, the core transition metal element may be the same as the second shell transition metal element.

The base source may further include a complexing agent, a reducing agent, a pH regulator, and a buffer. For example, the complexing agent may be $Na_3C_6H_5O_7 2H_2O$. The reducing agent may be $NaH_2PO_2H_2O$. The pH regulator may be NaOH. The buffer may be $(NH_4)_2SO_4$.

As a more specific example, the base source may be fabricated by mixing $FeSO_4 7H_2O$ at a concentration of 0.2M, $CoSO_3 7H_2O$ at a concentration of 0.09M, $Na_3C_6H_5O_7 2H_2O$ at a concentration of 0.3M, $NaH_2PO_2H_2O$ at a concentration of 0.25M, $(NH_4)_2SO_4$ at a concentration of 0.1M, and NaOH.

As described above, the base source may be provided to the magnetic core fiber 110 by an electroless plating method. According to one embodiment, the magnetic core 100 may be immersed in the base source. In this case, the first shell transition metal element and the second shell transition metal element may be subjected to a reaction by the catalyst particles. Accordingly, the magnetic shell 120 surrounded by the magnetic core fiber 110 may be formed. According to one embodiment, the magnetic shell 120 may have soft magnetism. For example, the magnetic shell 120 may include a compound structure of $Fe_{11}Co_5$. Besides, the magnetic shell 120 may include various compound structures having soft magnetism. The compound structure of the magnetic shell 120 may not be limited.

According to one embodiment, a plating time of the base source may be controlled. For example, the base source may be provided for a time of less than 20 minutes. Accordingly, the magnetic shell 120 may conformally cover the magnetic core fiber 110. Thus, in the fibrous magnetic structure 100 according to the embodiment, an exchange-coupling effect between the magnetic core fiber 110 and the magnetic shell 120 may be greater than a dipolar interaction of the magnetic core fiber 110 and the magnetic shell 120.

In contrast, when the base source is provided for a time of more than 20 minutes (when electroless plating is performed for a time of more than 20 minutes), a compound of the first shell transition metal element and the second shell transition metal element may be formed in the form of independent crystalline particles as well as a plating layer. In this case, the dipolar interaction of the magnetic core fiber 110 and the crystalline particles may be greater than the exchange-coupling effect between the magnetic core fiber 110 and the crystalline particles.

In a structure in which a hard magnetic structure and a soft magnetic structure are mixed, when the exchange-coupling effect occurs between the hard magnetic structure and the soft magnetic structure, magnetic properties such as coercive force, maximum magnetic energy product ($BH_{max}$), etc., may be enhanced. However, when the dipolar interaction is predominantly generated in each of the hard magnetic structure and the soft magnetic structure, the exchange-coupling effect between the hard magnetic structure and the soft magnetic structure may be decreased to reduce the magnetic properties.

The exchange-coupling effect between the hard magnetic structure and the soft magnetic structure and the magnitude of the dipolar interaction of the hard magnetic structure and the soft magnetic structure may be determined by the number of peaks represented in a graph showing a value obtained by <Equation a> below with respect to an applied field value (Oe) .

<Equation 1>

$$dM/dH$$

Magnetic moments, H: External magnetic field applied)

For example, when the exchange-coupling effect between the hard magnetic structure and the soft magnetic structure is greater than the dipolar interaction of the hard magnetic structure and the soft magnetic structure, one peak may appear in the graph mentioned above. In contrast, when the dipolar interaction of the hard magnetic structure and the soft magnetic structure is greater than the exchange-coupling effect between the hard magnetic structure and the soft magnetic structure, two peaks may appear in the graph mentioned above.

As a result, in the method for fabricating the fibrous magnetic structure according to the embodiment, a plating time of the base source may be controlled to be less than 20 minutes and an exchange-coupling effect between the magnetic core fiber 110 and the magnetic shell 120 may be greater than a dipolar interaction of the magnetic core fiber 110 and the magnetic shell 120, thereby enhancing magnetic properties such as coercive force, maximum magnetic energy product ($BH_{max}$), etc.

In addition, a diameter $D_c$ of the magnetic core fiber 110 may be smaller than a size of a single-domain $D_s$ of the magnetic core fiber 110, and a thickness $T_K$ of the magnetic shell 120 may be smaller than a double of a domain-wall width of the magnetic core fiber 110. In this case, an exchange-coupling effect between the magnetic core fiber 110 and the magnetic shell 120 may be greater than a dipolar interaction of the magnetic core fiber 110 and the magnetic shell 120. The domain-wall width may be defined as a distance between opposite sidewalls of the single crystal 110sc adjacent to each other.

According to one embodiment, a thickness $T_K$ of the magnetic shell 120 may be controlled according to a plating time of the base source. For example, when the plating time of the base source is controlled to be five minutes, the thickness $T_K$ of the magnetic shell 120 may be controlled to be 10 nm to 15 nm. In contrast, when the plating time of the base source is controlled to be 10 minutes, the thickness $T_K$ of the magnetic shell 120 may be controlled to be 15 nm to 25 nm. In contrast, when the plating time of the base source is controlled to be 15 minutes, the thickness $T_K$ of the magnetic shell 120 may be controlled to be 25 nm to 35 nm. In contrast, when the plating time of the base source is controlled to be 20 minutes, the thickness $T_K$ of the magnetic shell 120 may be controlled to be more than 40 nm.

As described above, in the fibrous magnetic structure 100 according to the embodiment, the thickness of the magnetic shell 120 may be controlled to be 40 nm or less as the plating time of the base source is controlled to be less than 20 minutes so that an exchange-coupling effect between the magnetic core fiber 110 and the magnetic shell 120 may be greater than a dipolar interaction of the magnetic core fiber 110 and the magnetic shell 120.

According to one embodiment, the pH and temperature of the base source may be controlled in order to enhance the magnetic properties of the fibrous magnetic structure 100. Specifically, the pH of the base source plated on the magnetic core fiber 110 may be controlled to be more than 8 and less than 12. In addition, the temperature of the base source plated on the magnetic core fiber 110 may be controlled to be more than 70°C and less than 90°C.

In contrast, when the pH of the base source is 8 or less, there may be a problem in which a plating layer is not formed on the magnetic core fiber 110. In contrast, when the pH of the base source is 12 or more, there may be a problem in which a compound of the first shell transition metal element and the second shell transition metal element is formed in the form of independent crystalline particles as well as a plating layer.

The conventional non-rare earth based spring magnet is difficult to replace the rare earth magnet of high energy density which is most used in actual industry. In addition, in spring magnets fabricated by simple mixing such as ball milling, etc., a site of an interaction between two phases of hard magnetic and soft magnetic properties is very limited compared to spring magnets having a stacked structure or a core-shell structure, and thus there is a problem in that it is difficult to expect the exchange-coupling effect effective enough to enhance magnetic properties.

In addition, in the conventional technique of plating a soft magnetic material on a hard magnetic material to provide a core-shell structure, self-aggregation may occur by magnetic attraction during a fabrication process as a core structure has a zero-dimensional structure (e.g., spherical particle). Accordingly, there was a problem of inducing uneven plating results and deterioration of magnetic properties. In order to fabricate the core-shell structure by a method other than the plating process, a sol-gel process is used, but there is a problem in which it is extremely difficult to establish an exchange-coupling effect due to a difficult control of a structure size. In addition, a two-dimensional composite magnet structure (e.g., film) is not suitable for mass production, and thus there is a problem in which the structure is difficult to be applied in reality.

However, the fibrous magnetic structure 100 according to an embodiment of the present invention may have a one-dimensional shape including the magnetic core fiber 110 and the magnetic shell 120 surrounding the magnetic core fiber 110. Accordingly, there may be provided a magnetic structure with enhanced magnetic properties such as coercivity, maximum magnetic energy product, etc., since self-aggregation by attraction is prevented, a shape anisotropy constant is increased, and an exchange-coupling effect between the magnetic core fiber 110 and the magnetic shell 120 is expressed to be greater than a dipolar interaction of the magnetic core fiber and the magnetic shell.

The magnetic fiber according to an embodiment of the present invention and the method for fabricating the same have been described above. Hereinafter, specific experimental examples and the results of evaluating properties will be described with regard to the magnetic fiber according to an embodiment of the present invention and the method for fabricating the same.

Fabricating of magnetic core fiber according to Example

$Sm(NO_3)_36H_2O$, $Co(NO_3)_26H_2O$, 0.3 wt% of polyvinylpyrrolidone (PVP), and 1.0M of citric acid anhydrous were mixed in DI water and stirred for six hours so as to fabricate a source solution. The fabricated source solution was injected into a 30-gauge syringe with a capacity of 12 mL, and a voltage of 20 kV was applied to a syringe pump and spun at a rate of 0.3 mL/h so as to fabricate a preliminary magnetic core fiber.

After that, the preliminary magnetic core fiber was oxidized by heat treatment in air at a temperature of 700°C, mixed $CaH_2$, and then reduced by heat treatment at a temperature of 700°C for three hours. Finally, the reduced preliminary magnetic core fiber was rinsed with a $NH_4Cl$/methanol solution at a concentration of 0.1 M so as to fabricate a magnetic core fiber according to an embodiment having a structure of $Sm_2Co_{17}$.

Fabricating of fibrous magnetic structure according to

Example

The magnetic core fiber according to the embodiment described above was immersed in a mixed solution of $SnCl_22H_2O$ and HCl (35-37%) for five minutes to carry out sensitization, immersed in a mixed solution of $PdCl_2$ and HCl for at least two minutes, and rinsed with DI water so as to activate the magnetic core fiber.

Prepared was a base source in which $FeSO_47H_2O$ at a concentration of 0.2M, $CoSO_37H_2O$ at a concentration of 0.09M, $Na_3C_6H_5O_72H_2O$ at a concentration of 0.3M, $NaH_2PO_2H_2O$ at a concentration of 0.25M, $(NH_4)_2SO_4$ at a concentration of 0.1M, and NaOH are mixed.

The activated magnetic core fiber was immersed in the prepared base source and subjected to an electroless plating process so as to coat the magnetic core fiber with a magnetic shell having FeCo, and rinsed with a mixed solution of DI water and methanol so as to fabricate a fibrous magnetic structure according to an embodiment.

In addition, a plurality of fibrous magnetic structures according to different embodiments were prepared by varying an electroless plating time, an electroless plating temperature, and a pH of the base source in the process of fabricating the fibrous magnetic structure described above. Specific conditions of the fabricated fibrous magnetic structure are summarized in <Table 1> below.

[Table 1]

| Classification | Plating time (min) | Plating temperature | Base source pH |
|---|---|---|---|
| Example 1 | 5 | 70°C | 9 |
| Example 2 | 10 | 70°C | 9 |
| Example 3 | 15 | 70°C | 9 |
| Example 4 | 20 | 70°C | 9 |
| Example 5 | 15 | 50°C | 9 |
| Example 6 | 15 | 70°C | 9 |
| Example 7 | 15 | 80°C | 9 |
| Example 8 | 15 | 90°C | 9 |

Fabricating of magnetic core particle according to

Comparative Example

Magnetic core particles with a Sm2Co17 structure according to Comparative Example were prepared by using a source solution containing $Sm(NO_3)6H_2O$ and $Co(NO_3)_26H_2O$.

Fabricating of spherical magnetic structure according to

Comparative Example

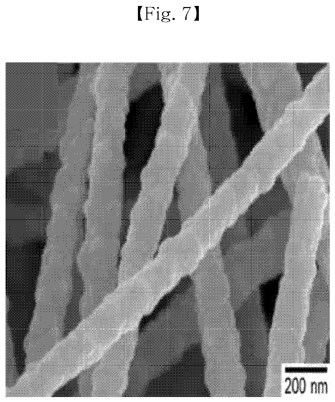

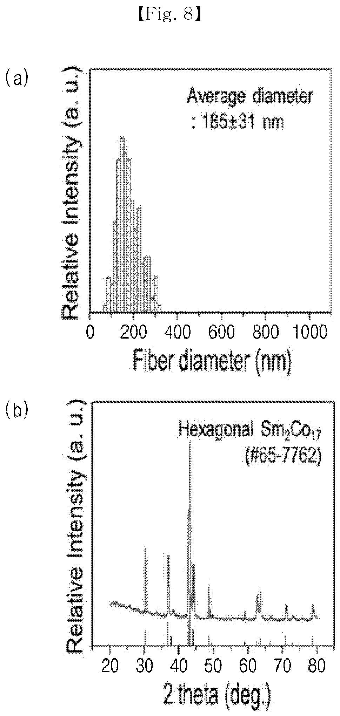

A spherical magnetic nano structure according to Comparative Example, in which a magnetic shell having a $Fe_{11}Co_5$ structure was coated on a $Sm_2Co_{17}$ magnetic core particle, was fabricated through a method for fabricating the fibrous magnetic structure according to the embodiment described above. FIG. 7 is a photographic view showing a magnetic core fiber according to an embodiment of the present invention, and FIG. 8 is a graph showing properties of a magnetic core fiber according to an embodiment of the present invention.

Referring to FIG. 7, the magnetic core fiber according to the embodiment was represented through a scanning electron microscopy (SEM). As can be understood from FIG. 7, it was confirmed that the magnetic core fiber according to the Example has a fiber shape.

Referring to (a) of FIG. 8, there is a histogram showing relative intensity (a.u.) measured depending on a diameter (nm) of the magnetic core fiber according to the embodiment. Referring to (b) of FIG. 8, there is an X-ray diffraction (XRD) pattern showing relative intensity (a.u.) measured depending on 2 theta (deg.) of the magnetic core fiber according to the Example.

As can be understood from (a) of FIG. 8, it was confirmed that the magnetic core fiber according to the embodiment has an average diameter size of 185 ± 31 nm. As can be understood from (b) of FIG. 8, it was confirmed that the magnetic core fiber according to the embodiment has a $Sm_2CO_{17}$ structure.

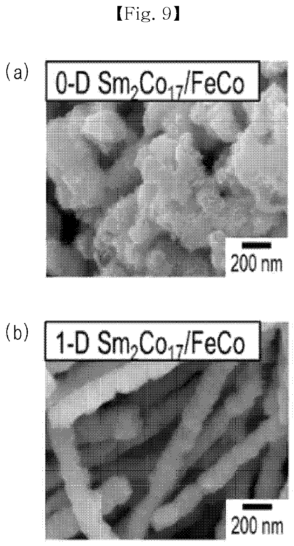

FIG. 9 is a photographic view showing a comparison between a spherical magnetic structure according to Comparative Example of the present invention and a fibrous magnetic fiber according to Example.

Referring to (a) of FIG. 9, the spherical magnetic structure according to above Comparative Example was represented through a scanning electron microscopy (SEM). Referring to (b) of FIG. 9, the fibrous magnetic structure according to above Example was represented through the SEM. As can be understood from (a) and (b) of FIG. 9, the magnetic structure according to Comparative Example has a sphere shape, whereas the magnetic structure according to Example has a fiber shape.

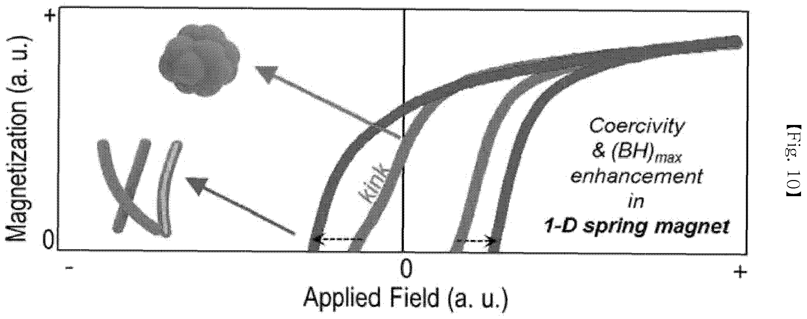

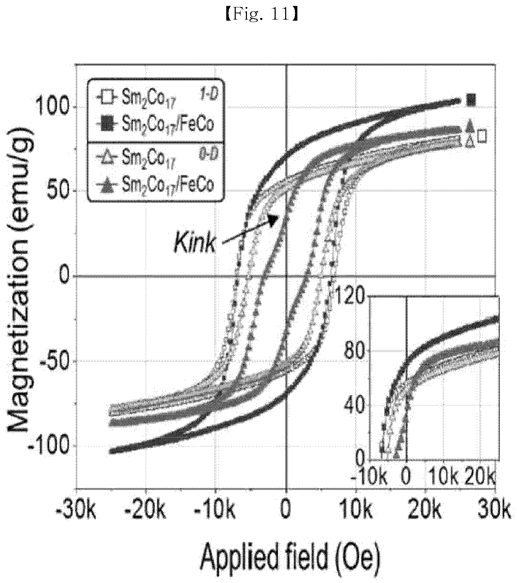

FIGS. 10 and 11 are graphs showing the coercivity and maximum magnetic energy product of magnetic structures according to Comparative Example and Example of the present invention.

Referring to FIG. 10, the coercivity and the maximum magnetic energy product $((BH)_{max})$ were measured and shown with respect to the magnetic structure according to Comparative Example and Example of the present invention. Referring to FIG. 11, a magnetization value (emu/g) was measured to show an M-H curve with respect to a magnetic core particle $(Sm_2Co_{17}, 0-D)$ according to Comparative Example of the present invention, a spherical magnetic structure $(Sm_2CO_{17}, 0-D)$ according to Comparative Example, a magnetic core fiber $(Sm_2CO_{17}, 1-D)$ according to Example, and a fibrous magnetic structure $(Sm_2Co_{17}, 0-D)$ according to Example.

As can be understood from FIG. 10, it was confirmed that the fibrous magnetic structure according to Example exhibits the coercivity and maximum magnetic energy product higher than those of the spherical magnetic structure according to Comparative Example. In addition, as can be understood from FIG. 11, it was confirmed that a graph area of the fibrous magnetic structure according to Example is larger than that of the magnetic core fiber according to Example. Accordingly, it can be understood that the fibrous magnetic structure has improved coercivity and maximum magnetic energy product compared to the spherical magnetic structure, and the magnetic properties of the fibrous magnetic structure are higher than those of the magnetic core fiber.

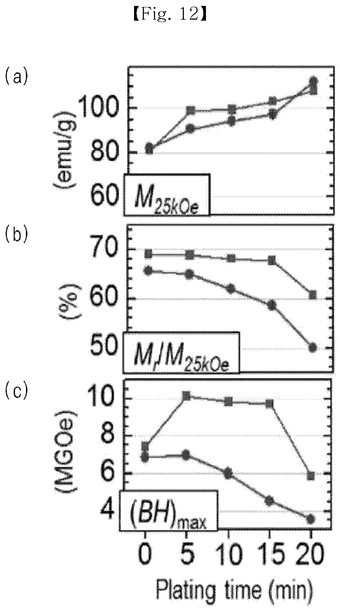

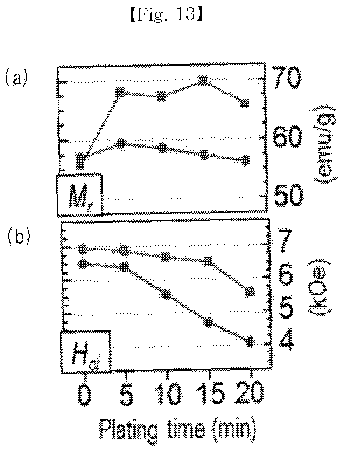

FIGS. 12 and 13 are graphs showing a comparison of various magnetic properties of magnetic structures according to Comparative Example and Example of the present invention.

Referring to (a) to (c) of FIG. 12, maximum magnetization $(M_{25kOe}, emu/g)$ , squareness $(M_r/M_{25kOe}, \%)$ and maximum energy product $((BH)_{max}, MGOe)$ were measured and shown in (a) of FIG. 12, (b) of FIG. 12, and (c) of FIG. 12, respectively with respect to the spherical magnetic structure (0-D) according to above Comparative Example and the fibrous magnetic structure (1-D) according to above Example. Referring to (a) and (b) of FIG. 13, remanence (Mr, emu/g) and intrinsic coercivity $(H_{ci}, kOe)$ were measured and shown in (a) of FIG. 13 and (b) of FIG. 13, respectively with respect to the spherical magnetic structure (0-D) according to above Comparative Example and the fibrous magnetic structure (1-D) according to above Example.

As can be understood from FIGS. 12 and 13, it was confirmed that the fibrous magnetic structure (1-D) according to above Example has maximum magnetization $(M_{25kOe}, emu/g)$, squareness $(M_r/M_{25kOe}, \%)$, remanence (Mr, emu/g), intrinsic coercivity $(H_{ci}, kOe)$, and maximum energy product $((BH)_{max}, MGOe)$ are all higher than those of the spherical magnetic structure (0-D) according to above Comparative Example.

In particular, as can be understood from (c) of FIG. 12, it was confirmed that the fibrous magnetic structure according to above Example has a maximum magnetic energy product $((BH)_{max})$ enhanced up to 36.4% as a plating time of the base source increases in the process of fabricating the fibrous magnetic structure.

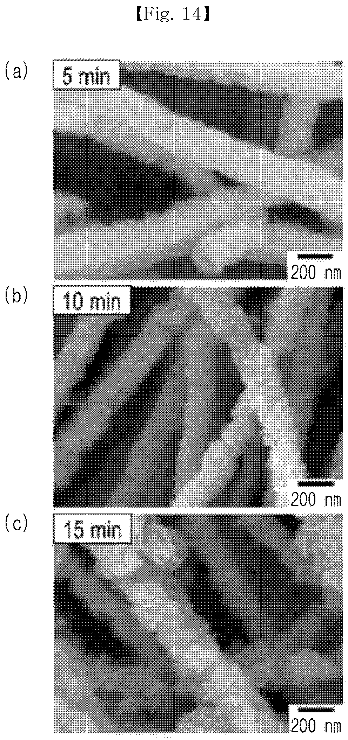

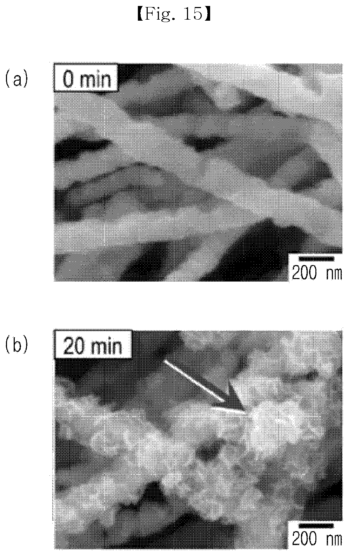

FIGS. 14 and 15 are photographic views showing a magnetic core fiber and a fibrous magnetic structure according to Example of the present invention.

Referring to (a) to (c) of FIG. 14, the fibrous magnetic structure according to above Examples 1 to 3 was represented through the SEM. Referring to (a) and (b) of FIG. 15, the magnetic core fiber according to above Example and the fibrous magnetic structure according to Example 4 were represented through the SEM.

As can be understood from (a) to (c) of FIG. 14, it was confirmed that a FeCo layer is formed on the surface of the magnetic core fiber ($Sm_2Co_{17}$). However, as can be understood from (b) of FIG. 15, it was confirmed that FeCo is formed in the form of independent crystalline particles when plated for a time of 20 minutes.

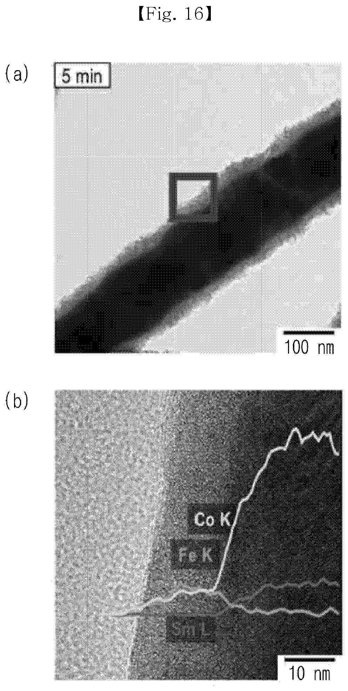

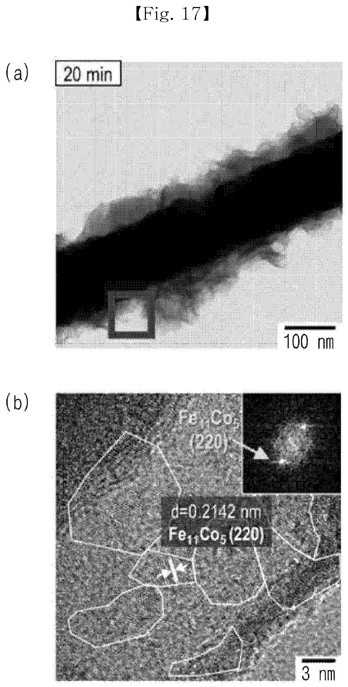

FIG. 16 is a photographic view specifically showing a fibrous magnetic structure according to Example 1 of the present invention, and FIG. 17 is a photographic view specifically showing a fibrous magnetic structure according to Example 4 of the present invention.

Referring to (a) of FIG. 16, the fibrous magnetic structure according to above Example 1 was represented through the transmission electron microscopy (TEM). Referring to (b) of FIG. 16, a cross-sectional EDS line scan profile of (a) of FIG. 16 was shown.

As can be understood from (a) and (b) of FIG. 16, it was confirmed that the FeCo layer is formed on the magnetic core fiber with a thickness of 10 nm to 15 nm and is clearly distinguished from the magnetic core fiber.

Referring to (a) of FIG. 17, the fibrous magnetic structure according to above Example 4 was represented through the transmission electron microscopy (TEM). Referring to (b) of FIG. 17, a cross-sectional EDS line scan profile of (a) of FIG. 17 was shown.

As can be understood from (a) and (b) of FIG. 17, it was confirmed that the FeCo layer is formed on the magnetic core fiber with a thickness of 40 nm, has the form of independent crystalline particles, and has an unclear boundary with the magnetic core fiber.

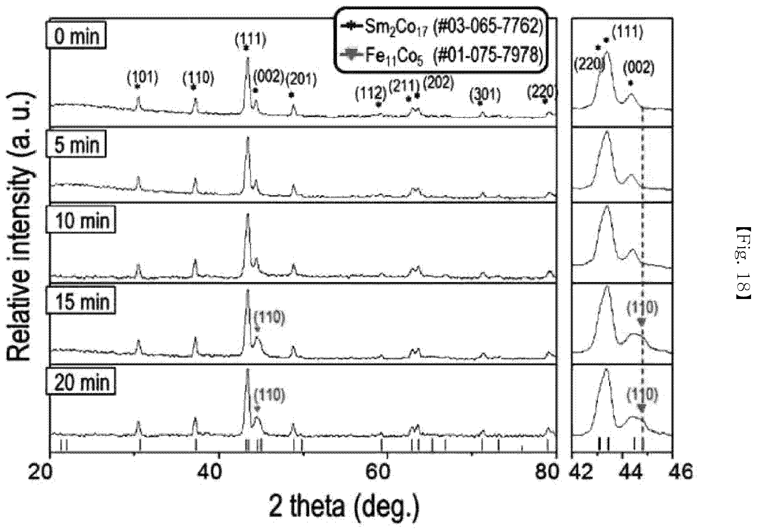

FIG. 18 is a graph showing an XRD pattern of a magnetic core fiber and a fibrous magnetic structure according to an embodiment of the present invention.

Referring to FIG. 18, an XRD pattern was shown by measuring the relative intensity (a.u.) depending on 2 theta (deg.) with respect to the magnetic core fiber (0 min) according to above Example and the fibrous magnetic structures (5 min, 10 min, 15 min, 20 min) according to Examples 1 to 4, respectively.

As can be understood from FIG. 18, it was confirmed that a clear hexagonal $Sm_2Co_{17}$ pattern appears with respect to all of the fibrous magnetic structures according to above Examples 1 to 4. Accordingly, it can be understood that the magnetic core fiber is not damaged under the conditions such as the pH, temperature and the like of the base source in the process of subjecting the magnetic core fiber to electroless plating with the base source. In addition, it was confirmed that a small FeCo peak appears for the fibrous magnetic structure according to above Example 3, whereas a relatively large FeCo peak appears and an X-ray diffraction pattern of crystalline Fe-Co appears for the fibrous magnetic structure according to above Example 4.

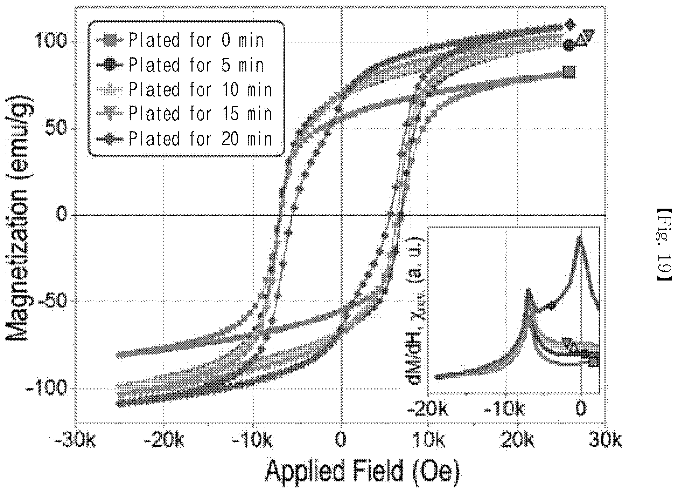

FIG. 19 is a graph showing an M-H curve of a magnetic core fiber and a fibrous magnetic structure according to an embodiment of the present invention.

Referring to FIG. 19, magnetization (emu/g) and dM/dH; $\chi_{rev}$ (a.u.) depending on applied field (Oe) were measured and shown with respect to the magnetic core fiber according to above Example (plated for 0 min), the fibrous magnetic structure according to Example 1 (plated for 5 min), the fibrous magnetic structure according to Example 2 (plated for 10) min), the fibrous magnetic structure according to Example 3 (plated for 15 min), and the fibrous magnetic structure according to Example 4 (plated for 20 min), respectively. (M: Magnetic moments, H: External magnetic field applied)

As can be understood from FIG. 19, it was confirmed that a curve area of the fibrous magnetic structure according to Example 4 is remarkably lower than a curve area of the fibrous magnetic structure according to above Examples 1 to 3. In addition, it was confirmed that the fibrous magnetic structure according to Examples 1 to 3 shows one peak in the dM/dH curve, but the fibrous magnetic structure according to Example 4 shows two peaks. In other words, it can be understood that the fibrous magnetic structure according to Example 4 shows a dipolar interaction of the magnetic core fiber ($Sm_2Co_{17}$) and the magnetic shell (FeCO) larger than an exchange-coupling effect between the magnetic core fiber ($Sm_2Co_{17}$) and the magnetic shell (FeCO), and thus the magnetic properties are weakened.

Besides, the magnetic properties of the magnetic core fiber and the fibrous magnetic structure according to the embodiment are summarized in <Table 2> below.

[Table 2]

| Classification | Magnetic core fiber of Example | Fibrous magnetic structure of Example 1 | Fibrous magnetic structure of Example 2 | Fibrous magnetic structure of Example 3 | Fibrous magnetic structure of Example 4 |
|---|---|---|---|---|---|
| Electroless plating time (min) | 0 | 5 | 10 | 15 | 20 |
| Plating layer (nm) | - | 10-15 | 15-25 | 25-35 | >40 |
| Saturation magnetization (emu/g) | 80.995 | 98.956 | 99.357 | 103.290 | 108.470 |
| Residual magnetization (emu/g) | 55.809 | 67.974 | 68.163 | 69.750 | 65.862 |
| Coercivity (Oe) | 6943.8 | 6873.7 | 6582.7 | 6528.3 | 5571.0 |
| Rectangularity ratio | 68.904 | 68.691 | 68.604 | 67.528 | 60.719 |
| $(BH)_{max}$(MGOe) | 7.43 | 10.14 | 9.34 | 9.70 | 5.85 |

As can be seen from FIGS. 18 and 19 and <Table 4>, it can be understood that controlling a plating time of the base source to be less than 20 minutes is an effective method in order to enhance magnetic properties such as coercivity, maximum magnetic energy product ($BH_{max}$) and the like by enabling the exchange-coupling effect between the magnetic core fiber and the magnetic shell to be larger than the dipolar interaction of the magnetic core fiber and the magnetic shell.

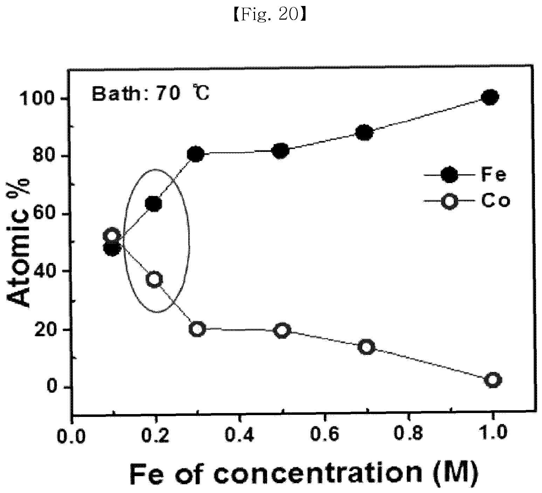

FIG. 20 is a graph showing an effect of $FeSO_4$ concentration during a process of fabricating a fibrous magnetic structure according to an embodiment of the present invention.

Referring to FIG. 20, the concentration of $FeSO_4$ was controlled in the process of preparing the base source, after which the atomic % of the Fe and Co elements contained in the fibrous magnetic structure according to Example 1 fabricated according to the controlled concentration was measured and shown.

As can be understood from FIG. 20, it was confirmed that the fibrous magnetic structure according to Example 1 has a structure of $Fe_{65}Co_{35}$ when the concentration of $FeSO_4$ is controlled to be 0.2M. Since the structure of $Fe_{65}Co_{35}$ has the highest saturation magnetization value in the soft magnetic phases, it was understood that controlling the concentration of $FeSO_4$ to be 0.2M is an effective method in order to enhance the magnetic properties of the fibrous magnetic structure according to the embodiment.

In addition, an experiment was performed to confirm the effect of the pH of the base source during the process of fabricating the fibrous magnetic structure according to an embodiment of the present invention. Specifically, an observation was made on the fibrous magnetic structure according to Example 1 fabricated through a base source having a pH of 1 to 8, the fibrous magnetic structure according to Example 1 fabricated through a base source having a pH of 9 to 11, and the fibrous magnetic structure according to Example 1 fabricated through a base source having a pH of 12 or higher, respectively. The observed results are summarized in <Table 3> below.

[Table 3]

| pH | Plating layer structure |
|---|---|
| 1-8 | Plating layer not formed |
| 9-11 | Conformal FeCo plating layer formed |
| 12 or more | Partial FeCo plating layer + FeCo independent crystalline particles |

As can be understood from <Table 3>, it was understood that controlling a pH of the base source to be more than 8 and less than 12 is an effective method in order to enhance magnetic properties such as coercivity, maximum magnetic energy product ($BH_{max}$) and the like by enabling the exchange-coupling effect between the magnetic core fiber and the magnetic shell to be larger than the dipolar interaction of the magnetic core fiber and the magnetic shell.

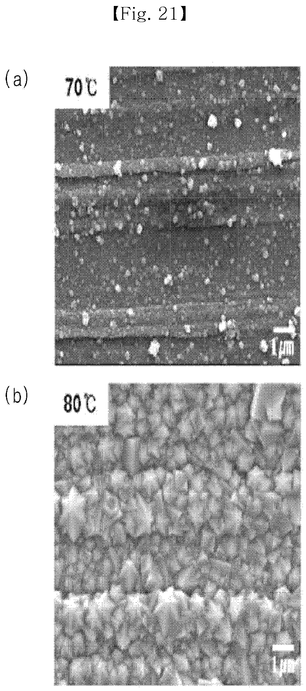

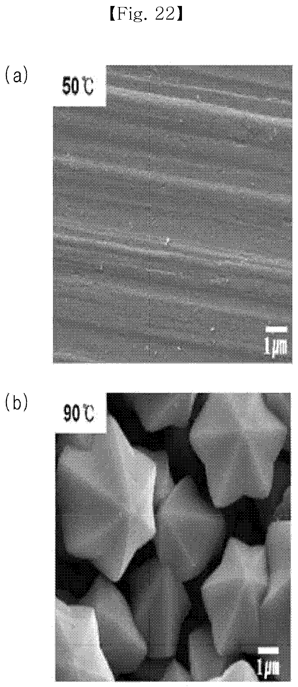

FIG. 21 is a photographic view showing a fibrous magnetic structure according to Examples 6 and 7 of the present invention, and FIG. 22 is a photographic view showing a fibrous magnetic structure according to Examples 5 and 8 of the present invention.

Referring to (a) and (b) of FIG. 21, the fibrous magnetic structure according to above Examples 6 and 7 was represented through the SEM. Referring to (a) and (b) of FIG. 22, the fibrous magnetic structure according to Examples 5 and 8 were represented through the SEM.

As can be understood from (a) and (b) of FIG. 21, it was confirmed that the fibrous magnetic structure according to Examples 6 and 7 have a FeCo layer easily formed on the surface of the magnetic core fiber ($Sm_2Co_{17}$). However, as can be understood from (a) of FIG. 22, it was confirmed that the fibrous magnetic structure according to Example 5 does not have a FeCo layer formed on the surface of the magnetic core fiber ($Sm_2Co_{17}$). As can be understood from (b) of FIG. 22, it was confirmed that the fibrous magnetic structure according to Example 8 has FeCo formed in an independent particle shape.

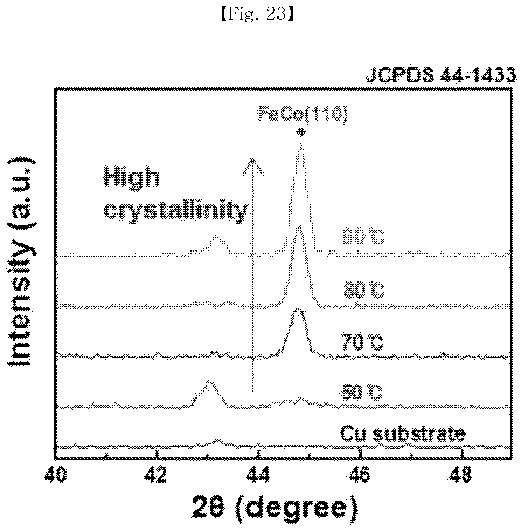

FIG. 23 is a graph showing crystallinity of a fibrous magnetic structure according to Examples 5 to 8 of the present invention.

Referring to FIG. 23, the fibrous magnetic structure according to Examples 5 to 8 of the present invention (50°C, 70°C, 80°C, 90°C) was prepared, after which intensity (a.u.) according to $2\theta$ (degree) was measured and shown, respectively.

As can be understood from FIG. 23, it was confirmed that the fibrous magnetic structure according to Examples 5 to 8 has crystallinity gradually increased. In other words, it was understood that the crystallinity of FeCo constituting the magnetic shell of the fabricated fibrous magnetic structure also increases as the temperature of the base source plated on the magnetic core fiber increases.

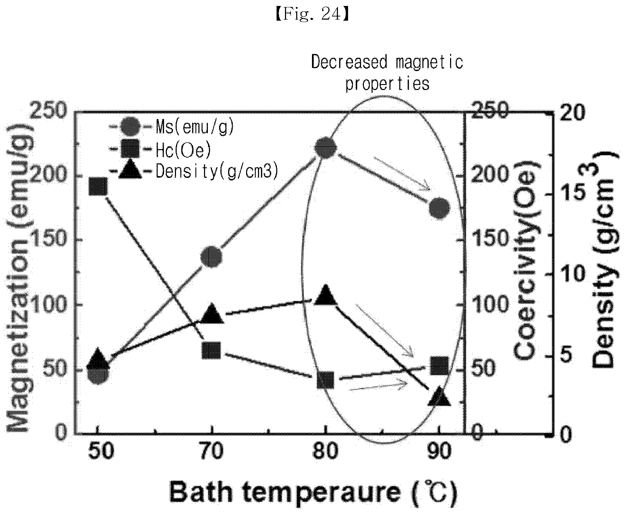

FIG. 24 is a graph showing magnetic properties of a fibrous magnetic structure according to Examples 5 to 8 of the present invention.

Referring to FIG. 24, the fibrous magnetic structure according to Examples 5 to 8 of the present invention (50°C, 70°C, 80°C, 90°C) was prepared, after which magnetization (emu/g), coercivity (Oe), and density (g/cm$^3$) were measured and shown, respectively.

As can be understood from FIG. 24, it was confirmed that the fibrous magnetic structure according to Examples 5, 6 and 7 has magnetization gradually increased and the fibrous magnetic structure according to Example 8 has magnetization decreased. In other words, it was confirmed that magnetization is gradually increased in the case of the fibrous magnetic structure fabricated in a section where the temperature of the base source to be plated on the magnetic core fiber increases from 50°C to 80°C, magnetization is gradually decreased in the case of the fibrous magnetic structure fabricated in a section of 80°C or higher.

As a result, as can be understood from FIGS. 21 to 24, it was understood that controlling a temperature of the base source to be more than 70°C and less than 90°C is an effective method in order to enhance magnetic properties such as coercivity, maximum magnetic energy product ($BH_{max}$) and the like by enabling the exchange-coupling effect between the magnetic core fiber and the magnetic shell to be larger than the dipolar interaction of the magnetic core fiber and the magnetic shell.

Although the present invention has been described in detail with reference to exemplary embodiments, the scope of the present invention is not limited to a specific embodiment and should be interpreted by the attached claims. In addition, those skilled in the art should understand that many modifications and variations are possible without departing from the scope of the present invention.

[Industrial Applicability]

A fibrous magnetic structure and a method for fabricating the same according to an embodiment of the present invention may be used in electric devices such as motors, speakers, measuring instruments, etc., and small motors in hybrid vehicles (HEVs) and electric vehicles (EVs).

**Claims**

1. A method for fabricating a fibrous magnetic structure, the method comprising:

   preparing a magnetic core fiber including a rare earth element and a core transition metal element;
   arranging catalyst particles on the magnetic core fiber; and
   forming a magnetic shell surrounding the magnetic core fiber by using the catalyst particles as a plating process using a base source including a first precursor including a first shell transition metal element and a second precursor including a second shell transition metal element, and including a compound of the first shell transition metal element and the second shell transition metal element.

2. The method of claim 1, wherein the base source is provided for a time of less than 20 minutes and a thickness of the magnetic shell is 40 nm or less.

3. The method of claim 1, wherein a temperature of the base source is controlled to be more than 70°C and less than 90°C.

4. The method of claim 1, wherein the base source further comprises a pH regulator, and a pH of the base source is controlled to be more than 8 and less than 12.

5. The method of claim 1, wherein the preparing of the magnetic core fiber comprises:

   preparing a source solution including the rare earth element and the core transition metal element;
   fabricating a preliminary magnetic core fiber by electrospinning the source solution;
   oxidizing the preliminary magnetic core fiber by heat treatment; and
   reducing the oxidized preliminary magnetic core fiber by heat treatment with a reducing agent.

6. A fibrous magnetic structure comprising:

   a magnetic core fiber including a rare earth element and a core transition metal element; and
   a magnetic shell surrounding the magnetic core fiber and including a first shell transition metal element and a second shell transition metal element,
   wherein an exchange-coupling effect between the magnetic core fiber and the magnetic shell is greater than a dipolar interaction of the magnetic core fiber and the magnetic shell.

7. The method of claim 6, wherein one peak is represented in a graph showing a value obtained by <Equation 1> below with respect to an applied field value (Oe).

$$<Equation\ 1>$$

$$dM/dH$$

(M: Magnetic moments, H: External magnetic field applied)

8. The method of claim 6, wherein the magnetic core fiber has a plurality of single crystals connected in series in a longitudinal direction of the magnetic core fiber.

9. The method of claim 6, wherein a diameter of the magnetic core fiber is smaller than a size of a single domain of the magnetic core fiber.

10. The method of claim 6, wherein a thickness of the magnetic shell is smaller than a double of a domain-wall width of the magnetic core fiber.

11. The method of claim 6, wherein the magnetic shell is conformally disposed on the magnetic core fiber.

12. The method of claim 6, wherein the rare earth element comprises any one of La, Ce, Pr, Nd, Sm, or Gd.

13. The method of claim 6, wherein the core transition metal element, the first shell transition metal element, and the second shell transition metal element comprise any one of Fe, Co, or Ni.

14. The method of claim 6, wherein the core transition metal element is identical to any one of the first shell transition metal element or the second shell transition metal element.

【Fig. 1】

```
                    ┌─────────┐
                    │  Start  │
                    └────┬────┘
                         │
                         ▼
┌──────────────────────────────────────────────────────┐
│  Prepare a magnetic core fiber including a rare earth  │──S100
│    element and a core transition metal element         │
└──────────────────────────┬─────────────────────────────┘
                           │
                           ▼
┌──────────────────────────────────────────────────────┐
│   Arrange catalyst particles on the magnetic core fiber │──S200
└──────────────────────────┬─────────────────────────────┘
                           │
                           ▼
┌──────────────────────────────────────────────────────┐
│  Form a magnetic shell surrounding the magnetic core    │
│  fiber by using the catalyst particles as a plating     │
│  process using a base source including a first          │
│  precursor including a first shell transition metal      │──S300
│  element and a second precursor including a second      │
│  shell transition metal element, and including a        │
│  compound of the first shell transition metal element    │
│  and the second shell transition metal element           │
└──────────────────────────┬─────────────────────────────┘
                           │
                           ▼
                    ┌─────────┐
                    │   End   │
                    └─────────┘
```

【Fig. 2】

```
        ┌─────────┐
        │  S100   │
        └─────────┘
             │
             ▼
┌───────────────────────────────────────────────────┐
│  Prepare a source solution including the rare      │  ～S100
│  earth element and the core transition metal       │
│  element                                           │
└───────────────────────────────────────────────────┘
             │
             ▼
┌───────────────────────────────────────────────────┐
│  Fabricate a preliminary magnetic core fiber by    │  ～S200
│  electrospinning the source solution               │
└───────────────────────────────────────────────────┘
             │
             ▼
┌───────────────────────────────────────────────────┐
│  Oxidize the preliminary magnetic core fiber by    │  ～S200
│  heat treatment                                    │
└───────────────────────────────────────────────────┘
             │
             ▼
┌───────────────────────────────────────────────────┐
│  Reduce the oxidized preliminary magnetic core     │  ～S300
│  fiber by heat treatment with a reducing agent     │
└───────────────────────────────────────────────────┘
             │
             ▼
        ┌─────────┐
        │  S200   │
        └─────────┘
```

[Fig. 3]

SMco

110

Sensitization

Sn

Activation

Pd-Sn

Deposition

FeCo

Fe(Co)ions

Rinsing

100
(SmCo/FeCo)

110
120

【Fig. 4】

【Fig. 5】

【Fig. 6】

【Fig. 7】

【Fig. 8】

(a)

(b)

【Fig. 9】

(a)

0-D Sm$_2$Co$_{17}$/FeCo

200 nm

(b)

1-D Sm$_2$Co$_{17}$/FeCo

200 nm

【Fig. 10】

【Fig. 11】

【Fig. 12】

【Fig. 13】

【Fig. 14】

(a)

5 min

200 nm

(b)

10 min

200 nm

(c)

15 min

200 nm

【Fig. 15】

(a)

(b)

【Fig. 16】

(a)

(b)

【Fig. 17】

(a)

(b)

【Fig. 18】

【Fig. 19】

【Fig. 20】

【Fig. 21】

(a)

(b)

【Fig. 22】

(a)

(b)

【Fig. 23】

【Fig. 24】

## INTERNATIONAL SEARCH REPORT

| International application No. |
|---|
| **PCT/KR2020/003771** |

**A.   CLASSIFICATION OF SUBJECT MATTER**

*H01F 1/053(2006.01)i, H01F 1/14(2006.01)i, H01F 7/02(2006.01)i, H01F 27/24(2006.01)i, H01F 3/00(2006.01)i*

According to International Patent Classification (IPC) or to both national classification and IPC

**B.   FIELDS SEARCHED**

Minimum documentation searched (classification system followed by classification symbols)
H01F 1/053; D04H 1/728; H01F 1/057; H01F 1/08; H01F 1/10; H01F 41/02; H01F 7/02; H01F 1/14; H01F 27/24; H01F 3/00

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: rare-earth element, transition metal element, magnetic core fiber, catalyst particle, magnetic shell, fiber type magnetic structure

**C.   DOCUMENTS CONSIDERED TO BE RELEVANT**

| Category* | Citation of document, with indication, where appropriate, of the relevant passages | Relevant to claim No. |
|---|---|---|
| Y | KR 10-2014-0033315 A (THE BOARD OF TRUSTEES OF THE UNIVERSITY OF ALABAMA FOR AND ON BEHALF OF THE UNIVERSITY OF ALABAMA) 18 March 2014<br>See paragraphs [0009]-[0032] and figure 1. | 1-14 |
| Y | KR 10-2017-0104118 A (INDUSTRY-UNIVERSITY COOPERATION FOUNDATION HANYANG UNIVERSITY ERICA CAMPUS) 14 September 2017<br>See paragraphs [0022] and [0031]-[0049] and figures 1-2. | 1-14 |
| A | JP 2014-216339 A (TDK CORP.) 17 November 2014<br>See paragraphs [0012]-[0045]. | 1-14 |
| A | JP 2015-230978 A (TOYOTA MOTOR CORP.) 21 December 2015<br>See paragraphs [0027]-[0036] and [0038]-[0045] and figures 1 and 4. | 1-14 |
| A | 김종렬. 1 차원 구조를 갖는 교환자기결합형 Sm-Co/Fe-Co 코어쉘 나노섬유의 구현 및 자기적특성. 한국자기학회 학술연구 발표회 논문개요집. May 2019, 29(1), pp. 115-115, non-official translation (KIM, Jongryeol. Implementation and Magnetizing Characteristics of Exchange-magnetic Combined Sm-Co/Fe-Co Core-shell Nanofiber with One-dimensional Structure. Digests of the KMS (Korea Magnetics Society) 2019 Summer Conference). [Retrieved on 05 June 2020], Retrieved from <URL: http://www.dbpia.co.kr/pdf/pdfView.do?nodeId=NODE09222842&mark=0&useDate=&bookmarkCnt=0&ipRange=N&language=ko_KR>.<br>See page 115 and figure 1. | 1-14 |

☐  Further documents are listed in the continuation of Box C.          ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 JUNE 2020 (22.06.2020) | **23 JUNE 2020 (23.06.2020)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

| INTERNATIONAL SEARCH REPORT<br>Information on patent family members | | International application No.<br><br>**PCT/KR2020/003771** | |
|---|---|---|---|
| Patent document<br>cited in search report | Publication<br>date | Patent family<br>member | Publication<br>date |
| KR 10-2014-0033315 A | 18/03/2014 | CN 103221998 A<br>EP 2641245 A1<br>US 2013-0342297 A1<br>US 2015-0287506 A1<br>US 9076579 B2<br>US 9406418 B2<br>WO 2012-068178 A1 | 24/07/2013<br>25/09/2013<br>26/12/2013<br>08/10/2015<br>07/07/2015<br>02/08/2016<br>24/05/2012 |
| KR 10-2017-0104118 A | 14/09/2017 | KR 10-1886558 B1 | 08/08/2018 |
| JP 2014-216339 A | 17/11/2014 | CN 104112559 A<br>CN 104112559 B<br>CN 108417334 A<br>CN 108417334 B<br>DE 102014105638 A1<br>JP 6361089 B2<br>US 2014-0311291 A1<br>US 9607743 B2 | 22/10/2014<br>04/05/2018<br>17/08/2018<br>03/03/2020<br>23/10/2014<br>25/07/2018<br>23/10/2014<br>28/03/2017 |
| JP 2015-230978 A | 21/12/2015 | CN 105304251 A<br>CN 105304251 B<br>JP 6007945 B2<br>US 2015-0357100 A1 | 03/02/2016<br>10/10/2017<br>19/10/2016<br>10/12/2015 |

Form PCT/ISA/210 (patent family annex) (January 2015)

**EP 3 996 115 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170108468

- KR 1020160032417